(19) Europäisches Patentamt
European Patent Office
Office européen des brevets

(11) **EP 1 716 039 B1**

(12) **FASCICULE DE BREVET EUROPEEN**

(45) Date de publication et mention
de la délivrance du brevet:
**07.07.2010 Bulletin 2010/27**

(21) Numéro de dépôt: **04816563.3**

(22) Date de dépôt: **16.12.2004**

(51) Int Cl.:
*B62D 101/00* (2006.01)    *B62D 113/00* (2006.01)
*B62D 6/00* (2006.01)

(86) Numéro de dépôt international:
**PCT/FR2004/050710**

(87) Numéro de publication internationale:
**WO 2005/061316 (07.07.2005 Gazette 2005/27)**

(54) **PROCEDE ET SYSTEME DE COMMANDE DU BRAQUAGE DE ROUE ARRIERE DIRECTRICE ET VEHICULE AINSI EQUIPE**

VERFAHREN UND SYSTEM ZUR STEUERUNG DER LENKUNG EINES GELENKTEN HINTERRADS UND DIESES UMFASSENDES FAHRZEUG

METHOD AND SYSTEM FOR CONTROLLING STEERED REAR WHEEL STEERING, AND VEHICLE COMPRISING SAME

(84) Etats contractants désignés:
**AT BE BG CH CY CZ DE DK EE ES FI FR GB GR HU IE IS IT LI LT LU MC NL PL PT RO SE SI SK TR**

(30) Priorité: **18.12.2003 FR 0314931**

(43) Date de publication de la demande:
**02.11.2006 Bulletin 2006/44**

(73) Titulaire: **RENAULT S.A.S.**
**92100 Boulogne Billancourt (FR)**

(72) Inventeurs:
• **GUEGAN, Stéphane**
**F-75002 Paris (FR)**
• **POTHIN, Richard**
**F-92420 Vaucresson (FR)**

(56) Documents cités:
**EP-A- 0 723 902**        **EP-A- 0 734 939**
**WO-A-02/14137**        **DE-A- 4 330 055**
**US-A1- 2002 143 451**

• **PATENT ABSTRACTS OF JAPAN vol. 1999, no. 09, 30 juillet 1999 (1999-07-30) & JP 11 102499 A (NISSAN MOTOR CO LTD), 13 avril 1999 (1999-04-13)**

**Description**

La présente invention relève du domaine des systèmes de commande de véhicules terrestres, en particulier de véhicules automobiles à roues.

De façon classique, les véhicules automobiles sont pourvus d'un châssis, d'un habitacle, de roues reliées au châssis par un mécanisme de suspension avec des roues avant directrices commandées par un volant à la disposition du conducteur dans l'habitacle du véhicule.

Le document FR-A-2 681 303 décrit un dispositif de commande de direction arrière pour véhicule automobile à quatre roues directrices, comprenant une plaque formant came et deux galets disposés dans un même plan médian vertical contenant l'axe longitudinal d'une barre de direction arrière commandant le pivotement des roues arrière.

Ce document décrit également que pour obtenir le meilleur comportement routier possible du véhicule, il est nécessaire de braquer les roues arrière dans le même sens que les roues avant pour une valeur d'angle de braquage du volant inférieure à une valeur de seuil prédéterminée dans le sens opposé aux roues avant lorsque la valeur d'angle de braquage dépasse la valeur de seuil. On obtiendrait ainsi un effet « survireur » souhaitable du véhicule lorsque l'angle de braquage est relativement important, par exemple lorsqu'on gare le véhicule dans un garage ou un parc de stationnement, et un effet « sous-vireur » également souhaitable lorsque l'angle de braquage est relativement petit comme c'est le cas lorsque le véhicule roule rapidement.

Toutefois, un tel dispositif, relativement fruste, ne permet pas d'agir finement sur le comportement du véhicule.

On connait également par le document WO02/14137A1 un procédé de commande de braquage qui décrit les caractéristiques du préambule des revendications 1 et 9, mais ce procédé est complexe.

L'invention propose de remédier à ces inconvénients et propose un procédé et un système de commande évolués, permettant d'améliorer le comportement du véhicule et par conséquent la sécurité du conducteur et le confort de conduite.

Le procédé de commande du braquage de roue arrière directrice, selon un aspect de l'invention, est destiné à un véhicule à au moins trois roues directrices. En fonction de l'angle de braquage de roue avant, de données de déplacement du véhicule, et d'une consigne antérieure de braquage de roue arrière, on estime une perturbation subie par le véhicule et on élabore une consigne actuelle de braquage de roue arrière. Il est ainsi possible de minimiser les effets des perturbations sur le véhicule et sur leur perception par le conducteur.

Dans l'invention, lesdites données de déplacement du véhicule comprennent la vitesse longitudinale du véhicule. La consigne peut ainsi tenir compte de la vitesse et être adaptée à la conduite en zone urbaine, en zone rurale, et sur voies rapides.

Dans un mode de réalisation de l'invention, lesdites données de déplacement du véhicule comprennent la vitesse de lacet du véhicule.

Dans un mode de réalisation de l'invention, à partir de l'estimation de la perturbation et de données de déplacement du véhicule, on élabore une consigne actuelle de braquage de roue arrière. Lesdites données de déplacement du véhicule peuvent comprennent la vitesse longitudinale du véhicule. Le rejet de la perturbation est effectué en fonction de la vitesse longitudinale du véhicule. La consigne actuelle de braquage de roue arrière peut être élaborée de façon que la perturbation soit rejetée asymptotiquement. Alternativement, la consigne actuelle de braquage de roue arrière peut être élaborée de façon que la perturbation soit rejetée asymptotiquement lors d'évènements identifiés. Un évènement identifié peut être le déclenchement d'un système antiblocage de roues, d'un système anti-patinage, d'une détection de freinage sur adhérence dissymétrique, etc.

La consigne actuelle de braquage de roue arrière peut être transmise à au moins un module de commande d'un autre système, par exemple un système anti-blocage de roues, ou un système anti-patinage.

Dans un mode de réalisation de l'invention, on élabore une consigne actuelle de braquage de roue arrière tant que le véhicule est en mouvement. En d'autres termes, le braquage dynamique de roue arrière directrice est actif en permanence dès la mise en mouvement du véhicule.

L'invention propose également un système de commande du braquage de roue arrière directrice pour véhicule à au moins trois roues directrices. Le système comprend un moyen pour élaborer une consigne actuelle de braquage de roue arrière en fonction de l'angle de braquage de roue avant, de données de déplacement du véhicule, et d'une consigne antérieure de braquage de roue arrière, ledit moyen pour élaborer une consigne comprenant un module de rejet de perturbation.

Dans un mode de réalisation de l'invention, ledit moyen pour élaborer une consigne comprend un observateur d'état apte à fournir au module de rejet de perturbation une estimation d'au moins une variable. Ladite variable peut être la perturbation subie par le véhicule et/ou toute autre variable dont la mesure est impossible, difficile ou onéreuse.

Dans un mode de réalisation de l'invention, ledit observateur d'état comprend une entrée d'angle de braquage de roue avant, une entrée de données de déplacement du véhicule, et une entrée de consigne antérieure de braquage de roue arrière. Le système présente une structure en boucle fermée, particulièrement robuste en fonctionnement.

Dans un mode de réalisation de l'invention, ledit observateur d'état comprend une entrée de vitesse longitudinale du véhicule, une entrée de vitesse de lacet du véhicule et une sortie d'estimation de perturbation subie par le véhicule.

Dans un mode de réalisation de l'invention, ledit module de rejet de perturbation comprend une entrée de vitesse longitudinale du véhicule et une entrée d'estimation de perturbation subie par le véhicule.

L'invention propose également un véhicule pourvu d'un châssis, d'au moins trois roues directrices reliées élastiquement au châssis, et d'un système de commande du braquage de roue arrière directrice comprenant un moyen pour élaborer une consigne actuelle de braquage de roue arrière en fonction de l'angle de braquage de roue avant, de données de déplacement du véhicule, et d'une consigne antérieure de braquage de roue arrière, ledit moyen pour élaborer une consigne comprenant un module de rejet de perturbation.

L'invention s'applique à des véhicules à quatre roues, deux avant et deux arrière, à trois roues, ou encore à des véhicules à six roues ou plus, dont au moins quatre directrices.

L'invention permet à un véhicule d'adopter le comportement le plus stable possible, quel que soit la sollicitation du conducteur ou l'état de la chaussée. On peut tenir compte de certaines situations susceptibles d'engendrer une perte de contrôle du véhicule, comme par exemple un évitement d'obstacle simple ou double. L'invention permet de réduire les risques de perte de contrôle dans ce type de cas, qui peuvent être dus à une réponse du véhicule inadaptée car trop vive, pas assez amortie ou encore peu prévisible.

Par ailleurs, l'invention permet un accroissement de la sensation de sécurité, du confort et du plaisir de conduite.

Le système de commande des roues directrices arrière sur véhicule à quatre roues directrices permet de minimiser, en tenant compte de la vitesse du véhicule, la réponse latérale du véhicule à un coup de volant du conducteur. L'optimisation est faite suivant des critères de sécurité, de confort et d'agrément de conduite.

La présente invention sera mieux comprise à l'étude de la description détaillée de quelques modes de réalisation pris à titre d'exemples nullement limitatifs et illustrés par les dessins annexés, sur lesquels :

- la figure 1 est une vue schématique d'un véhicule équipé d'un système de commande selon un aspect de l'invention;
- la figure 2 est un schéma logique du système selon un aspect de l'invention;
- la figure 3 est un schéma logique du système selon un autre aspect de l'invention; et
- la figure 4 est un schéma logique du système selon un autre aspect de l'invention.

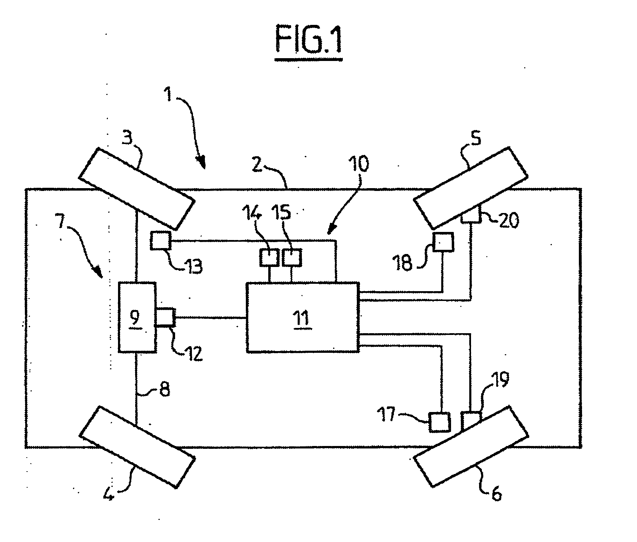

Comme on peut le voir sur la figure 1, le véhicule 1 comprend un châssis 2, deux roues avant directrices 3 et 4 et deux roues arrière directrices 5 et 6, les roues étant reliées au châssis 2 par un mécanisme de suspension non représenté.

Le véhicule 1 se complète par un système de direction 7 comprenant une crémaillère 8 disposée entre les roues avant 3 et 4, un actionner de crémaillère 9 apte à orienter les roues avant 3 et 4 par l'intermédiaire de la crémaillère 8 en fonction d'ordres reçus, de façon mécanique ou électrique, en provenance d'un volant de direction non représenté, à disposition d'un conducteur du véhicule.

Le système de commande d'aide au braquage 10 comprend une unité de commande 11, un capteur 12 de la position de braquage des roues avant 3 et 4, par exemple positionné sur l'actionneur 9, un capteur 13 de la vitesse de rotation des roues avant permettant de déterminer la vitesse V du véhicule, un capteur 14 de la vitesse de lacet $\hat{\psi}$ du véhicule, c'est-à-dire de la vitesse de rotation du véhicule autour de son centre de gravité suivant un axe vertical, et un capteur 15 de l'accélération latérale au centre de gravité du véhicule.

En outre, le système 10 comprend des capteurs 17 et 18 de l'angle de braquage des roues arrière 5 et 6, et des actionneurs 19 et 20 permettant d'orienter lesdites roues arrière 5 et 6. Toutefois, un seul capteur 17 et un seul actionneur 19 peuvent suffire à la détection de l'angle de braquage et à l'orientation des roues arrière 5 et 6. Les capteurs de position et de vitesse peuvent être de type optique ou encore magnétique, par exemple à effet Hall, coopérant avec un codeur solidaire d'une partie mobile tandis que le capteur est non tournant.

L'unité de commande 11 peut être réalisée sous la forme d'un microprocesseur équipé d'une mémoire vive, d'une mémoire morte, d'une unité centrale et d'interfaces d'entrée/sortie permettant de recevoir des informations des capteurs et d'envoyer des instructions, notamment aux actionneurs 19 et 20.

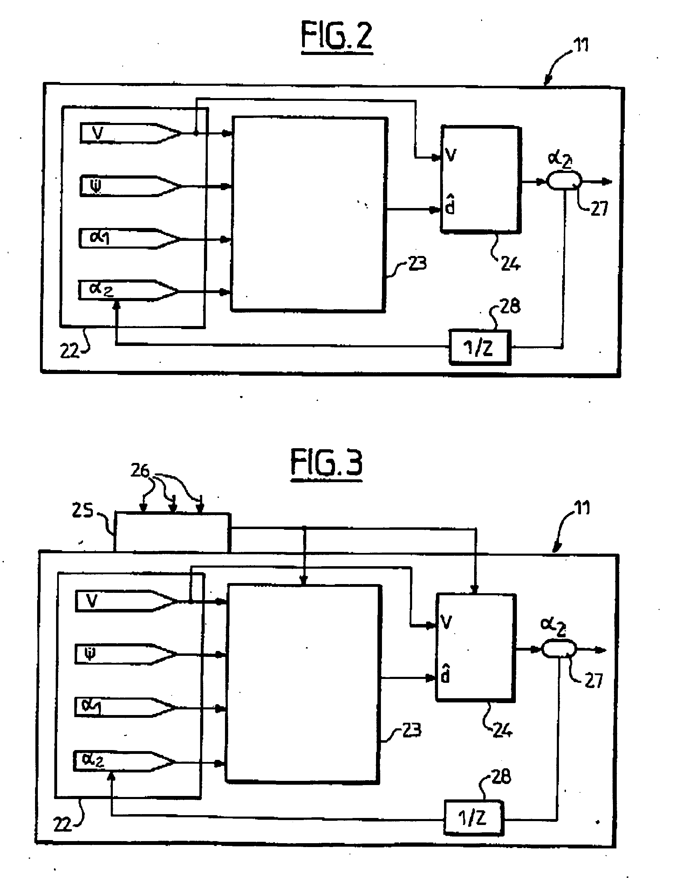

Plus précisément, l'unité de commande 11 comprend un bloc d'entrée 22 recevant les signaux en provenance des capteurs 12 à 14, et notamment la vitesse du véhicule V, la vitesse de lacet $\dot{\psi}$ et l'angle de roues avant $\alpha_1$, voir figure 2. La vitesse V du véhicule peut être obtenue en faisant la moyenne de la vitesse des roues avant ou des roues arrière telle que mesurée par les capteurs d'un système antiblocage de roues. Dans ce cas, il est prévu un capteur 13 par roue, le système antiblocage de roues comprenant une sortie reliée à une entrée de l'unité de commande 11 pour fournir l'information de vitesse du véhicule. Alternativement, chaque capteur 13 est relié à une entrée de l'unité de commande 11, l'unité de commande 11 effectuant alors la moyenne de la vitesse des roues.

L'unité de commande 11 comprend également un observateur d'état 23, permettant d'estimer les informations qui ne sont pas mesurées et qui sont nécessaires à la commande, notamment les perturbations qui agissent sur le véhicule. L'observateur d'état 23 peut par exemple être construit à partir d'un modèle de véhicule à deux roues directrices sans ballant en faisant l'hypothèse qu'une perturbation d de type échelon peut agir directement sur la vitesse de lacet du véhicule sur un intervalle de temps fini. Une dynamique qui modélise le comportement de l'actionneur peut être ajoutée. L'équation d'état associée au modèle étendu par la perturbation, est la suivante

$$\begin{bmatrix} \ddot{\psi} \\ \dot{\beta} \\ \dot{\alpha}_{f2} \\ \dot{d} \end{bmatrix} = \begin{pmatrix} -\dfrac{D_1 L_1^2 + D_2 L_2^2}{V I_z} & \dfrac{D_2 L_2 - D_1 L_1}{I_z} & -\dfrac{D_2 L_2}{I_z} & 0 \\ -1 + \dfrac{D_2 L_2 - D_1 L_1}{MV^2} & -\dfrac{D_1 + D_2}{MV} & \dfrac{D_2}{MV} & 0 \\ 0 & 0 & 0 & -\dfrac{1}{\tau} \\ 0 & 0 & 0 & 0 \end{pmatrix} \begin{bmatrix} \dot{\psi} \\ \beta \\ \alpha_{f2} \\ d \end{bmatrix} + \begin{pmatrix} 0 \\ 0 \\ \dfrac{1}{\tau} \\ 0 \end{pmatrix} \alpha_2 + \begin{pmatrix} \dfrac{D_1 L_1}{I_z} \\ \dfrac{D_1}{MV} \\ 0 \\ 0 \end{pmatrix} \alpha_1$$

$$y = (1 \quad 0 \quad 0 \quad 1) \begin{bmatrix} \dot{\psi} \\ \beta \\ \alpha_{f2} \\ d \end{bmatrix}$$

dans laquelle on note y la sortie considérée, M la masse totale du véhicule, $I_z$ l'inertie du véhicule autour d'un axe vertical passant par son centre de gravité, $L_1$ la distance du centre de gravité à l'essieu avant, $L_2$ la distance du centre de gravité à l'essieu arrière, L l'empattement du véhicule égal à L1+L2, $D_1$ la rigidité de dérive avant, $D_2$ la rigidité de dérive arrière, $\alpha_1$ l'angle des roues avant avec l'axe longitudinal du véhicule, $\alpha_2$ l'angle de consigne des roues arrière, $\alpha_{f2}$ l'angle de braquage réel des roues arrière, V la vitesse du véhicule, $\dot{\psi}$ la vitesse de lacet, $\beta$ l'angle de dérive, et $\tau$ le temps de réponse de l'actionneur.

A partir de ce modèle, on développe la théorie classique des observateurs linéaires. L'observateur d'état 23 permet d'estimer les états du véhicule et l'ensemble des perturbations qui agissent sur le véhicule. L'observateur d'état peut donc utiliser l'équation suivante :

$$\begin{bmatrix} \ddot{\psi} \\ \dot{\hat{\beta}} \\ \dot{\hat{\alpha}}_{f2} \\ \dot{\hat{d}} \end{bmatrix} = \begin{pmatrix} -\dfrac{D_1 L_1^2 + D_2 L_2^2}{V I_z} & \dfrac{D_2 L_2 - D_1 L_1}{I_z} & -\dfrac{D_2 L_2}{I_z} & 0 \\ -1 + \dfrac{D_2 L_2 - D_1 L_1}{MV^2} & -\dfrac{D_1 + D_2}{MV} & \dfrac{D_2}{MV} & 0 \\ 0 & 0 & 0 & -\dfrac{1}{\tau} \\ 0 & 0 & 0 & 0 \end{pmatrix} \begin{bmatrix} \hat{\psi} \\ \hat{\beta} \\ \hat{\alpha}_{f2} \\ \hat{d} \end{bmatrix} + \begin{pmatrix} 0 \\ 0 \\ \dfrac{1}{\tau} \\ 0 \end{pmatrix} \dot{\alpha}_2 + \begin{pmatrix} \dfrac{D_1 L_1}{I_z} \\ \dfrac{D_1}{MV} \\ 0 \\ 0 \end{pmatrix} \alpha_1 + Ko(V)(\dot{\psi} - \hat{y})$$

$$\hat{y} = (1 \quad 0 \quad 0 \quad 1) \begin{bmatrix} \hat{\psi} \\ \hat{\beta} \\ \hat{\alpha}_{f2} \\ \hat{d} \end{bmatrix}$$

avec ^ qui signifie que les valeurs sont estimées, d la perturbation subie par le véhicule, et Ko(V) le paramètre de réglage de l'observateur d'état qui évolue en fonction de la vitesse du .véhicule. Les quatre valeurs estimées $\hat{\dot{\psi}}$, $\hat{\beta}$, $\hat{\alpha}_{f2}$ et $\hat{d}$ fournissent une estimation de l'état du véhicule qui pourrait être utilisée par d'autres éléments de l'unité de commande 11.

L'unité de commande 11 comprend en outre un bloc 24 de rejet de perturbation asymptotique.

Le bloc 24 de rejet de perturbation asymptotique permet de rendre la perturbation d inobservable par rapport à la sortie considérée y du modèle, en général la vitesse de lacet $\dot{\psi}$ du véhicule 1. Le bouclage est effectué sur la perturbation $\hat{d}$ estimée par l'observateur d'état 23. L'expression de la commande est $\alpha_2 = $ -Ga x $\hat{d}$. On peut prendre

$$Ga = \frac{((D_1 \dot{L}_1 - D_2 L_2) * (MV^2 L_2 + D_1 \dot{L}_1(L_2 + L_1)) - D_1(L_1 + L_2)(D_1 \dot{L}_1^2 + D_2 \dot{L}_2^2))}{VD_1 D_2^{\cdot} L_2(L_1 + L_2)}$$

L'unité de commande 11 se complète par une sortie 27 et un retard unitaire 28. La sortie 27 du module 24 de rejet de perturbation forme la sortie générale de l'unité de commande 11 et fournit la consigne d'angle de braquage $\alpha_2$ des roues arrière du véhicule. Le retard unitaire 28 reçoit en entrée la consigne d'angle de braquage $\alpha_2$ et la transmet au bloc d'entrée 22.

Dans le mode de réalisation illustrée sur la figure 3, l'unité de commande 11 est similaire à la précédente et comprend en outre un module 25 de détection de situation qui reçoit des informations par des entrées 26 reliées à des sorties d'autres modules non représentés, tels qu'un module de contrôle-commande de système anti-blocage de roue et un module contrôle-commande d'anti-patinage de roue. Le module 25 de détection de la situation est apte à envoyer des instructions à l'observateur d'état 23 et au bloc 24 de rejet de perturbation afin de permettre une meilleure estimation de la perturbation d en fournissant à l'observateur d'état 23 un signal représentatif par exemple de l'activation du système anti-blocage de roue. Le module 25 de détection de la situation est également apte à envoyer au bloc 24 de rejet de perturbation des instructions d'inhibition lorsque la situation détectée est telle qu'il soit souhaitable que l'angle de consigne $\alpha_2$ des roues arrière soit nul.

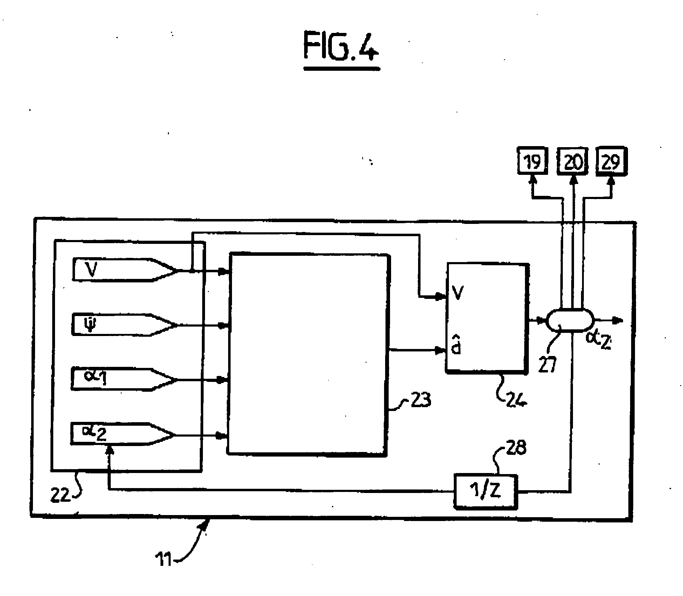

Dans les modes de réalisation illustrés sur les figures 2 et 3, l'angle de consigne $\alpha_2$ de braquage dès roues arrière est fourni aux actionneurs 19 et 20 d'orientation des roues arrière. On peut en outre prévoir, voir figure 4, de fournir l'angle de consigne $\alpha_2$ de braquage des roues arrière à d'autres systèmes du véhicule, par exemple un module 29 de contrôle-commande de système anti-blocage de roue afin de permettre audit module 29 de tenir compte du braquage des roues arrière lors de l'élaboration de ces consignes de freinage, voir figure 4.

A titre d'exemple, il est alors possible lors d'un freinage asymétrique, de freiner plus ou moins les roues présentant la meilleure adhérence selon que le système d'aide au braquage est disponible ou non pour compenser le moment de lacet induit par un tel freinage asymétrique. On parvient ainsi à améliorer de façon significative la tenue de route du véhicule lors du fonctionnement du système anti-blocage de roue.

A titre de variante, on peut prévoir que le module 29 soit un module d' anti-patinage des roues. On peut également prévoir une variante dans laquelle le système comprend un module 26 de détection de la situation, comme illustré sur la figure 3, et un module de contrôle-commande 29 d'un autre système, comme illustré sur la figure 4 recevant l'angle de consigne $\alpha_2$ de braquage des roues arrière.

L'invention permet de bénéficier du braquage des roues arrière à des moments voulus, notamment dès que le véhicule est en mouvement, et améliore la tenue de route du véhicule et le confort de conduite éprouvé par le conducteur.

**Revendications**

1. Procédé de commande du braquage de roue arrière directrice pour un véhicule à au moins trois roues directrices, dans lequel on estime une perturbation subie par le véhicule au moyen d'un observateur d'état, on élabore une consigne actuelle de braquage de roue arrière à partir de l'estimation de la perturbation et de données de déplacement du véhicule en rejetant la perturbation en fonction de la vitesse longitudinale du véhicule **caractérisé par le fait que** l'observateur d'état comprend une entrée d'angle de braquage de roue avant, une entrée de données de déplacement du véhicule et une entrée de consigne antérieure de braquage de roue arrière ayant subi un retard unitaire.

2. Procédé selon la revendication 1, dans lequel lesdites données de déplacement du véhicule comprennent la vitesse longitudinale $\dot{\psi}$ du véhicule.

**3.** Procédé selon la revendication 1 ou 2, dans lequel lesdites données de déplacement du véhicule comprennent la vitesse de lacet $\dot{\psi}$ du véhicule.

**4.** Procédé selon l'une quelconque des revendications 1 à 3, dans lequel la consigne actuelle de braquage de roue arrière est élaborée de façon que la perturbation d soit rejetée asymptotiquement.

**5.** Procédé selon la revendication 4, dans lequel la consigne actuelle de braquage de roue arrière est élaborée de façon que la perturbation d soit rejetée asymptotiquement lors d'un déclenchement d'un système anti-blocage des roues.

**6.** Procédé selon la revendication 4, dans lequel la consigne actuelle de braquage de roue arrière est élaborée de façon que la perturbation d soit rejetée asymptotiquement lors d'un déclenchement d'un système anti-patinage.

**7.** Procédé selon l'une quelconque des revendications précédentes, dans lequel la consigne actuelle de braquage de roue arrière est transmise à au moins un module de commande d'un autre système.

**8.** Procédé selon l'une quelconque des revendications précédentes, dans lequel on élabore une consigne actuelle de braquage des roue arrière tant que le véhicule est en mouvement.

**9.** Système de commande (10) du braquage de roue arrière directrice (5) pour un véhicule (1) à au moins trois roues directrices, comprenant un moyen pour élaborer une consigne actuelle de braquage d'au moins une roue arrière (5) en fonction de l'angle de braquage d'au moins une roue avant (3), de données de déplacement du véhicule, ledit moyen pour élaborer une consigne comprenant un module de rejet de perturbation (24) et un observateur d'état (23) apte à fournir au module de rejet de perturbation (24) une estimation $\hat{d}$ d'une perturbation subie par le véhicule en fonction de l'angle de braquage de roue avant $\alpha_1$ et de données de déplacement du véhicule, **caractérisé par le fait que** ledit observateur d'état (23) comprend une entrée d'angle de braquage de roue avant, une entrée de données de déplacement du véhicule et une entrée de consigne antérieure de braquage de roue arrière provenant d'un retard unitaire (28) et ledit module de rejet de perturbation (24) comprend une entrée de vitesse longitudinale V du véhicule, une entrée de l'estimation de perturbation $\hat{d}$ subie par le véhicule, fonction de la consigne antérieure de braquage de roue arrière et une sortie (27) qui fournit la consigne actuelle de braquage des roues arrière du véhicule, élaborée à partir de l'estimation de la perturbation $\hat{d}$ et de données de déplacement du véhicule.

**10.** Système selon la revendication 9, **caractérisé par le fait que** ledit observateur d'état (23) comprend une entrée de vitesse longitudinale V du véhicule, une entrée de vitesse de lacet $\dot{\psi}$ du véhicule et une sortie d'estimation de perturbation $\hat{d}$ subie par le véhicule.

**11.** Système selon l'une des revendications 9 ou 10, comprenant en outre un module (25) de détection de situation apte à envoyer au module de rejet de perturbation (24) des instructions d'inhibition lorsque la situation détectée est telle qu'il soit souhaitable que la consigne actuelle de braquage de roue arrière soit nulle.

**12.** Système selon l'une des revendications 9 à 11 dans lequel l'angle de braquage de roue avant utilisé pour l'estimation de la perturbation résulte d'un ordre reçu de façon mécanique ou électrique en provenance du volant de direction du véhicule à disposition du conducteur.

**13.** Véhicule (1) pourvu d'un châssis (2) et d'au moins trois roues directrices reliées élastiquement au châssis (2), **caractérisé par le fait qu'**il comprend un système de commande selon l'une des revendications 9 à 12.

**Claims**

**1.** Method for controlling steerable rear wheel deflection for a vehicle with at least three steerable wheels, in which a disturbance undergone by the vehicle is estimated by means of a state observer, a current setting of rear wheel deflection is formulated on the basis of the estimation of the disturbance and of vehicle displacement data while rejecting the disturbance as a function of the longitudinal speed of the vehicle **characterized in that** the state observer comprises an input for front wheel deflection angle, an input for vehicle displacement data and an input for an earlier setting of rear wheel deflection that has undergone a unitary delay.

**2.** Method according to Claim 1, in which the said vehicle displacement data comprise the longitudinal speed V of the vehicle.

3. Method according to Claim 1 or 2, in which the said vehicle displacement data comprise the yaw rate $\dot{\psi}$ of the vehicle.

4. Method according to any one of Claims 1 to 3, in which the current setting of rear wheel deflection is formulated in such a way that the disturbance d is rejected asymptotically.

5. Method according to Claim 4, in which the current setting of rear wheel deflection is formulated in such a way that the disturbance d is rejected asymptotically upon a triggering of a wheel anti-lock system.

6. Method according to Claim 4, in which the current setting of rear wheel deflection is formulated in such a way that the disturbance d is rejected asymptotically upon a triggering of an anti-slip system.

7. Method according to any one of the preceding claims, in which the current setting of rear wheel deflection is transmitted to at least one control module of another system.

8. Method according to any one of the preceding claims, in which a current setting of rear wheel deflection is formulated as long as the vehicle is in motion.

9. System (10) for controlling steerable rear wheel deflection (5) for a vehicle (1) with at least three steerable wheels, comprising a means for formulating a current setting of deflection of at least one rear wheel (5) as a function of the angle of deflection of at least one front wheel (3), of vehicle displacement data, the said means for formulating a setting comprising a disturbance rejection module (24) and a state observer (23) able to provide the disturbance rejection module (24) with an estimation $\hat{d}$ of a disturbance undergone by the vehicle as a function of the front wheel deflection angle $\alpha_1$ and of vehicle displacement data, **characterized in that** the said state observer (23) comprises an input for front wheel deflection angle, an input for vehicle displacement data and an input for an earlier setting of rear wheel deflection originating from a unitary delay (28) and said disturbance rejection module (24) comprises an input for longitudinal speed V of the vehicle, an input for the estimation of disturbance $\hat{d}$ undergone by the vehicle, dependent on the earlier setting of rear wheel deflection and an output (27) which provides the vehicle's current setting of rear wheel deflection, formulated on the basis of the estimation of the disturbance $\hat{d}$ and of vehicle displacement data.

10. System according to Claim 9, **characterized in that** the said state observer (23) comprises an input for longitudinal speed V of the vehicle, an input for yaw rate $\dot{\psi}$ of the vehicle and an output for estimation of disturbance $\hat{d}$ undergone by the vehicle.

11. System according to any one of Claims 9 and 10, further comprising a situation detection module (25) able to send disabling instructions to the disturbance rejection module (24) when the situation detected is such that it is desirable for the current setting of rear wheel deflection to be zero.

12. System according to any one of Claims 9 to 11 in which the front wheel deflection angle used for the estimation of the disturbance results from an order received mechanically or electrically from the vehicle's steering wheel at the disposal of the driver.

13. Vehicle (1) provided with a chassis (2) and with at least three steerable wheels linked elastically to the chassis (2), **characterized in that** it comprises a control system according to one of Claims 9 to 12.


**Patentansprüche**

1. Verfahren zur Steuerung des Einschlags eines gelenkten Hinterrads für ein Fahrzeug mit mindestens drei gelenkten Rädern, bei dem eine vom Fahrzeug erfahrene Störung mittels eines Zustandsbeobachters geschätzt wird, ein aktueller Hinterradeinschlag-Sollwert ausgehend von der Schätzung der Störung und von Fahrdaten des Fahrzeugs erarbeitet wird, indem die Störung in Abhängigkeit von der Längsgeschwindigkeit des Fahrzeugs abgewiesen wird, **dadurch gekennzeichnet, dass** der Zustandsbeobachter einen Vorderradeinschlagwinkel-Eingang, einen Eingang für Fahrdaten des Fahrzeugs und einen Eingang eines vorhergehenden Hinterradeinschlagwinkel-Sollwerts enthält, der eine Einheitsverzögerung erfahren hat.

**2.** Verfahren nach Anspruch 1, bei dem die Fahrdaten des Fahrzeugs die Längsgeschwindigkeit V des Fahrzeugs enthalten.

**3.** Verfahren nach Anspruch 1 oder 2, bei dem die Fahrdaten des Fahrzeugs die Giergeschwindigkeit $\dot{\psi}$ des Fahrzeugs enthalten.

**4.** Verfahren nach einem der Ansprüche 1 bis 3, bei dem der aktuelle Hinterradeinschlag-Sollwert so erarbeitet wird, dass die Störung d asymptotisch abgewiesen wird.

**5.** Verfahren nach Anspruch 4, bei dem der aktuelle Hinterradeinschlag-Sollwert so erarbeitet wird, dass die Störung d beim Auslösen eines Antiblockiersystems der Räder asymptotisch abgewiesen wird.

**6.** Verfahren nach Anspruch 4, bei dem der aktuelle Hinterradeinschlag-Sollwert so erarbeitet wird, dass die Störung d beim Auslösen eines Antischlupfsystems asymptotisch abgewiesen wird.

**7.** Verfahren nach einem der vorhergehenden Ansprüche, bei dem der aktuelle Hinterradeinschlag-Sollwert an mindestens ein Steuermodul eines anderen Systems übertragen wird.

**8.** Verfahren nach einem der vorhergehenden Ansprüche, bei dem ein aktueller Hinterradeinschlag-Sollwert erarbeitet wird, so lange das Fahrzeug in Bewegung ist.

**9.** System zur Steuerung (10) des Einschlags eines gelenkten Hinterrads (5) für ein Fahrzeug (1) mit mindestens drei gelenkten Rädern, das eine Einrichtung zum Erarbeiten eines aktuellen Einschlagsollwerts mindestens eines Hinterrads (5) in Abhängigkeit vom Einschlagwinkel mindestens eines Vorderrads (3), von Fahrdaten des Fahrzeugs enthält, wobei die Einrichtung zum Erarbeiten eines Sollwerts ein Störungsabweisungsmodul (24) und einen Zustandsbeobachter (23) enthält, der dem Störungsabweisungsmodul (24) eine Schätzung $\hat{d}$ einer vom Fahrzeug erfahrenen Störung in Abhängigkeit vom Vorderradeinschlagwinkel $\alpha_1$ und von Fahrdaten des Fahrzeugs liefern kann, **dadurch gekennzeichnet, dass** der Zustandsbeobachter (23) einen Vorderradeinschlagwinkel-Eingang, einen Eingang für Fahrdaten des Fahrzeugs und einen Eingang eines vorhergehenden Hinterradeinschlag-Sollwerts enthält, der von einer Einheitsverzögerung (28) stammt; und das Störungsabweisungsmodul (24) einen Eingang der Längsgeschwindigkeit V des Fahrzeugs, einen Eingang der Schätzung der vom Fahrzeug erfahrenen Störung $\hat{d}$, die vom vorherigen Hinterradeinschlag-Sollwert abhängt, und einen Ausgang (27) enthält, der den aktuellen Einschlagsollwert der Hinterräder des Fahrzeugs liefert, der ausgehend von der Schätzung der Störung $\hat{d}$ und von Fahrdaten des Fahrzeugs erarbeitet wird.

**10.** System nach Anspruch 9, **dadurch gekennzeichnet, dass** der Zustandsbeobachter (23) einen Eingang der Längsgeschwindigkeit V des Fahrzeugs, einen Eingang der Giergeschwindigkeit $\dot{\psi}$ des Fahrzeugs und einen Ausgang einer Schätzung der vom Fahrzeug erfahrenen Störung $\hat{d}$ enthält.

**11.** System nach einem der Ansprüche 9 oder 10, das außerdem ein Modul (25) zur Situationserfassung enthält, das an das Störungsabweisungsmodul (24) Sperranweisungen senden kann, wenn die erfasste Situation so ist, dass es wünschenswert ist, dass der aktuelle Hinterradeinschlag-Sollwert Null ist.

**12.** System nach einem der Ansprüche 9 bis 11, bei dem der für die Schätzung der Störung verwendete Vorderradeinschlagwinkel aus einem Befehl resultiert, der mechanisch oder elektrisch vom Lenkrad des Fahrzeugs empfangen wird, das dem Fahrer zur Verfügung steht.

**13.** Fahrzeug (1) mit einem Fahrgestell (2) und mit mindestens drei gelenkten Rädern, die elastisch mit dem Fahrgestell (2) verbunden sind, **dadurch gekennzeichnet, dass** es ein Steuersystem nach einem der Ansprüche 9 bis 12 enthält.

# FIG.1

## FIG.2

## FIG.3

# FIG.4

## RÉFÉRENCES CITÉES DANS LA DESCRIPTION

**Documents brevets cités dans la description**

- FR 2681303 A

- WO 0214137 A1